# EUROPÄISCHE PATENTSCHRIFT

(11) **EP 0 512 351 B1**
(45) Veröffentlichungstag und Bekanntmachung des Hinweises auf die Patenterteilung: **02.09.1998**
(21) Anmeldenummer: 92107133.8
(22) Anmeldetag: 27.04.1992
(51) Int. Cl.: H04Q 11/04, H04M 11/06

(54) **Protokolladapter**
Protocol adapter
Adaptateur de protocole

(30) Priorität: 10.05.1991 DE 4115242
(43) Veröffentlichungstag der Anmeldung: 11.11.1992
(73) Patentinhaber: ALCATEL ALSTHOM COMPAGNIE GENERALE D'ELECTRICITE, 75008 Paris (FR)
(72) Erfinder: Ertelt, Rainer, W-7141 Steinheim/Murr (DE); Aschrafi, Bagher, W-7317 Wendlingen (DE); Szechenyi, Kàlmán, W-7151 Spiegelberg (DE)
(74) Vertreter: Schätzle, Albin, Dipl.-Phys.

(56) Entgegenhaltungen:
- DE-C- 3 917 029
- DATA COMMUNICATIONS INTERNATIONAL Bd. 18, Nr. 3, M rz 1989, NEW YORK, US Seiten 85 - 100 , XP7906 WEISSBERGER 'The evolving version of ISDN's terminal adapter'
- NTZ - NACHRICHTENTECHNISCHE ZEITSCHRIFT Bd. 41, Nr. 9, September 1988, BERLIN, DE Seiten 494 - 499 RAAB 'Signalisierung f r umfassende ISDN-Kommunikation in
- Privaten Netzen'

## Beschreibung

Die Erfindung betrifft einen Protokolladapter zur Anpassung eines ersten Protokolles, insbesondere dem einer Vermittlungsstelle, an ein zweites Protokoll, insbesondere dem eines Telekommunikationsendgerätes, in einem Telekommunikationssystem.

Zum Kennzeichenaustausch zwischen einer ISDN-Digital Vermittlungsstelle und ISDN-Telekommunikationsendgeräten wurde die Richtlinie 1 TR 6 der Deutschen Bundespost in der Bundesrepublik Deutschland vorgegeben. Somit werden alle ISDN-Endgeräte gemäß dem Protokoll 1 TR 6 ausgestattet, um mit einer Digitalvermittlungsstelle, der dieses Protokoll fest vorgegeben ist, Informationen austauschen zu können (vgl. ISDN-D-Kanal-Protokoll 1 TR 6, Ausgabe 1/90, Deutsche Bundespost, FTZ).

In Europa wird derzeit in einem Normungsausschuß des ETSI (European Telecommunications Standards Institut) ein ISDN-Protokoll für Schicht-3-Funktionen erstellt (vgl. Document No.: ETS [CA], Version 1, 19.7.1990, "Integrated Services Digital Network (ISDN) User-Network Interface Layer 3 Specification for basic call control, Application of CCITT Recommendations Q.930/I.450 and Q.931/I.451).

Wenn nun das ETSI-Protokoll in Europa eingeführt wird, d.h. in Digitalvermittlungsstellen verwendet wird, muß das ETSI-Protokoll und das bisherige Protokoll, z.B. das Protokoll 1 TR 6 der Bundesrepublik Deutschland, für diese ISDN-Endgeräte angepaßt werden, die noch mit dem bisherigen Protokoll versehen sind.

In einer "Spezifikation der Protokollanpassung zum parallelen Betrieb von D-Kanal-Protokollen nach E-DSS1 und 1 TR 6 am Basisanschluß", des Fernmeldetechnischen Zentralamts der Deutschen Bundespost (Januar 1991) sind technische Anforderungen, die an eine Protokolladaption gestellt werden, und die funktionelle Beschreibung einer solchen Protokollanpassung sowie unter Punkt 4 die gewünschte technische Realisierung der Protokollanpassung beschrieben. Unter diesem Punkt 4 wird gefordert, daß die Protokollanpassung als Zusatzfunktion in ein Netzabschlußgerät integriert wird, wobei die Protokollanpassung lokal gespeist werden soll.

Die aus der o.g. Spezifikation bekannte Protokollanpassung hat nun den Nachteil, daß sie zusammen mit dem Netzabschlußgerät montiert werden muß. Da diese Netzabschlußgeräte in den Räumen des Telekommunikationsteilnehmers fest mit dem Gebäude verbunden sind und für die bekannte Protokollanpassung eine lokale Speisung vorgesehen ist, ist es erforderlich, daß ein geschulter Monteur den Austausch eines alten Netzanschlußgerätes durch ein neues Netzanschlußgerät mit Zusatzfunktion vornimmt

Aus DE-C-3917029 ist ein Endgeräteadapter mit zwei S₀-Schnittstellen bekannt. Über eine S₀-Schnittstelle ist der Endgeräteadapfer mit einem Netzabschluß eines diensteintegrierenden digitalen Fernmeldenetzes verbunden. Über die andere S₀-Schnittstellen ist der Endgeräteadapter mit einem Endgerät mit standardisierter Schnittstelle verbunden. Die Art der Speisung des Endgeräteadapters ist nicht beschrieben.

Aufgabe der Erfindung ist es, eine weitere Vorrichtung zur Protokollanpassung zu schaffen, die auch von einer ungeschulten Person einfach montiert werden kann.

Die Aufgabe wird durch die Merkmale des Anspruchs 1 gelöst.

Vorteilhafte Ausgestaltungen der Erfindung sind den Ansprüchen 2 und 3 zu entnehmen.

Schaltungen zur Protokollanpassung, sowohl die bekannte als auch die erfindungsgemäße, unterliegen nun, wie auch andere elektrische Geräte, einer gewissen Störanfälligkeit. Fällt nun eine solche Protokollanpassung aus, kann es vorkommen, daß sämtliche Kommunikationsendgeräte, unabhängig davon, ob sie schon mit dem ETSI-Protokoll versehen sind oder nicht, die über die ausgefallene Protokollanpassung mit einer digitalen Vermittlungsstelle verbunden sind, keine Daten mehr austauschen können. Der erfindungsgemäße Protokolladapter kann vorteilhafterweise so angeordnet werden, daß er jedem Telekommunikationsendgerät mit bisherigem Protokoll vorgeschaltet wird. Fällt ein Protokolladapter aus, ist nur das eine Gerät betroffen. Der Adapter kann auch leicht und schnell ausgewechselt werden.

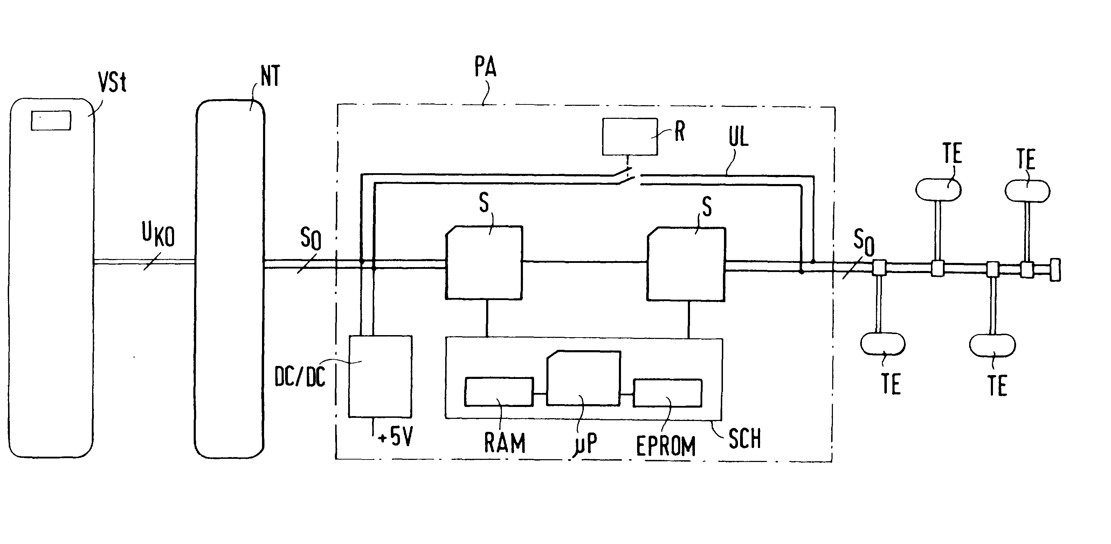

Ein Ausführungsbeispiel der Erfindung ist im folgenden anhand der Figur beschrieben.

Die Figur zeigt einen in ein Telekommunikationssystem eingebetteten erfindungsgemäßen Protokolladapter im Blockschaltbild.

Beim Ausführungsbeispiel wird davon ausgegangen, daß in einem Telekommunikationssystem eine digitale Vermittlungsstelle VSt mit einem bestimmten Protokoll, z.B. dem o.g. ETSI-Protokoll, und mehrere Telekommunikationsendgeräte, in denen wenigstens bei einigen das bestimmte Protokoll (ETSI-Protokoll) nicht vorliegt, angeordnet sind. In einem Protokolladapter PA werden nun die unterschiedlichen Protokolle in beide Übertragungsrichtungen angepaßt. Erfindungsgemäß ist der Protokolladapter PA zwischen einem Netzabschlußgerät NT und einem oder mehreren Telekommunikationsendgeräten TE angeordnet.

Die Figur zeigt eine digitale Vermittlungsstelle VSt, die über eine Schnittstelle U_{K0} mit einem Netzabschlußgerät NT verbunden ist. Das Netzabschlußgerät NT ist stellvertretend für alle Netzabschlußgeräte abgebildet, die mit der Vermittlungsstelle VSt verbunden sind, und es ist seinerseits über eine S₀-Schnittstelle, einem Protokolladapter PA mit Telekommunikationsgeräten TE verbunden. Im Ausführungsbeispiel sind die Schnittstellen U_{K0} und S₀ nach den CCITT-Empfehlungen angegeben. Anstelle der genannten Schnittstellen können aber auch andere Schnittstellen vorliegen, die ähnlich definiert sind.

Der Protokolladapter PA weist als Anschluß zur Netzabschlußschaltung NT und zu dem oder den Telekommunikationsendgeräten TE jeweils einen genormten Steckkontakt für eine S₀-Schnittstelle auf.

Im Protokolladapter PA werder, in einer Schaltung S für jede Übertragungsrichtung der D-Kanal abgezweigt und zugeführt. Der B1 + B2-Kanal wird transparent durchgeschaltet. Die Abzweigungen für den D-Kanal sind auf eine Schaltungsanordnung SCH geführt, in der gemäß der o.g. Spezifikation die Protokollanpassung durchgeführt wird und die einen hierzu erforderlichen Mikroprozessor µP und die entsprechend zugeordneten Speicher RAM und EPROM enthält. Der Funktionsablauf des Adapters PA und die Verknüpfung der einzelnen Elemente des Adapters PA stellen unter Verwendung der o.g. Spezifikation eine fachmännische Maßnahme dar.

Im Notbetrieb findet keine Anpassung der Protokolle statt. Für diesen Fall sind die beiden Anschlüsse des Protokolladapters PA direkt über eine Überbrückungsleitung UL miteinander verbunden. Im Normalbetrieb ist die Überbrückungsleitung UL durch ein Relais R unterbrochen.

Die Stromversorgung des gesamten Protokolladapters PA erfolgt über einen Gleichstromwandler DC/DC, der über die S₀-Schnittstelle gespeist wird.

Im Normalbetrieb liegt an der S₀-Schnittstelle eine Speisespannung von 40 Volt mit positivem Potential an. Die 40 Volt werden im Gleichstromwandler DC/DC auf 5 Volt gewandelt. Mit dieser 5 Volt Spannung werden die Bauteile des Protokolladapters PA, wie z.B. der Mikroprozessor µP, seine Speicher RAM, EPROM sowie die Schaltkreise S gespeist. Im Notbetrieb liegt an der S₀-Schnittstelle eine Speisespannung mit negativem Potential an, was zu einem Durchschalten der Überbrückungsleitung UL führt. Die Funktionsbereitschaft des Protokolladapters PA kann z.B. durch eine Leuchtdiode angezeigt werden.

Der Protokolladapter PA kann durch seine S₀-Steckverbindung und seine Speisung über die S₀-Schnittstelle an einem beliebigen Ort mit S₀-Schnittstelle angeordnet werden. In den nachfolgenden Beispiel sind für einzelne Fallgestaltungen geeignete Orte zur Anordnung des Adapters angegeben. Wenn die Digital-Vermittlungsstelle VSt mit dem ETSI-Protokoll und sämtliche Telekommunikationsendgeräte TE mit dem bisherigen Protokoll, z.B. dem 1 TR 6-Protokoll versehen sind, wird der Protokolladapter PA günstigerweise direkt am Ausgang des Netzabschlußgerätes NT angebracht. Dies hat den Vorteil, daß nur ein Protokolladapter PA benötigt wird. Liegen dagegen schon Telekommunikationsendgeräte mit ETSI-Protokoll vor, kann bei jedem Telekommunikationsendgerät TE mit bisherigem Protokoll, anstelle der zentralen Anordnung des Protokolladapters PA, jeweils ein Protokolladapter PA an der S₀-Schnittstelle des jeweiligen Gerätes angebracht werden. Dies hat den Vorteil, daß ein defekter Protokolladapter PA zu keiner Störung des Informationsaustausches der mit dem ETSI-Protokoll versehenen Geräte TE führt.

Der Protokolladapter PA hat den Vorteil, daß er direkt mit Telekommunikationsendgeräten angeboten werden kann, die mit dem bisherigen Protokoll versehen sind. Der Telekommunikationsteilnehmer braucht in diesem Fall sich nicht darum zu kümmern, ob das Netzabschlußgerät NT eine integrierte und funktionsfähige Protokollanpassung aufweist. Auch an Zukunft kann nicht zwangsweise vorausgesetzt werden, daß installierte Netzabschlußgeräte eine integrierte Protokollanpassung aufweisen. Es muß davon ausgegangen werden, daß nach der Einführungsphase des ETSI-Protokolls nur noch wenige Telekommunikationsendgeräte TE mit bisherigem Protokoll angeschlossen werden und die in ferner Zukunft installierten Netzabschlußgeräte keine integrierte Protokollanpassung mehr aufweisen, oder wenn eine integrierte Protokollanpassung noch vorhanden ist, diese defekt oder ausgeschaltet ist.

Im Ausführungsbeispiel wurde stets auf die Protokollanpassung zwischen dem Protokoll 1 TR 6 der Deutschen Bundespost als bisheriges Protokoll und dem ETSI-Protokoll Bezug genommen. Der Protokolladapter PA läßt sich grundsätzlich auch zur Anpassung zwischen anderen und auch zwischen mehr als zwei Protokollen verwenden.

## Patentansprüche

1. Protokolladapter ( PA ) mit zwei Anschlüssen, einem ersten Anschluß mit einer S₀-Schnittstelle ( S₀ ) zum Verbinden des Profokolladapters ( PA ) über die S₀-Schnittstelle ( S₀ ) mit einem Netzabschlußgerät ( NT ) und einem zweiten Anschluß zum Verbinden des Protokolladapters ( PA ) mit wenigstens einem Telekommunikationsendgerät ( TE ),
**dadurch gekennzeichnet,**
daß der Protokolladapter ( PA ) im Normalbetrieb über die S₀-Schnittstelle ( S₀ ) mit einer Speisespannung mit positivem Potential versorgt wird, daß der Protokolladapter ( PA ) im Notbetrieb über die S₀-Schnittstelle ( S₀ ) mit einer Speisespannung mit negativem Potential versorgt wird, und daß im Notbetrieb eine Überbrückungsleitung ( UL ) zum direkten Verbinden der beiden Anschlüsse durchgeschaltet wird.

2. Protokolladapter ( PA ) nach Anspruch 1, dadurch gekennzeichnet, daß der Protokolladapter ( PA ) ein Relais zum Unterbrechen der Überbrückungsleitung ( UL ) im Normalbetrieb und zum Durchschalten der Überbrückungsleitung ( UL ) im Notbetrieb beinhaltet.

3. Protokolladapter ( PA ) nach Anspruch 1 oder 2, dadurch gekennzeichnet, daß der Protokolladapter ( PA ) zur Anpassung von mehr als zwei Protokollen vorgesehen ist, und daß wenigstens zwei Telekommunikationsendgeräte ( TE ) mit unterschiedlichen Protokollen mit dem zweiten Anschluß verbindbar sind.

4. Protokolladapter ( PA ) nach Anspruch 1 oder 2, dadurch gekennzeichnet, daß dieser für die Anpassung zweier Protokolle in beide Übertragungsrichtungen vorgesehen ist.

5. Protokolladapter ( PA ) nach Anspruch 3 oder 4, dadurch gekennzeichnet, daß ein Protokoll das ISDN-D-Kanal-Protokoll 1 TR 6 der Deutschen Bundespost und ein weiteres Protokoll das ISDN-Protokoll des ETSI ( European Telecommunications Standards Institute ) für Schicht-3-Funktionen ( User-Network Interface Layer 3 Specifications for basic call control ) ist.

6. Protokolladapter ( PA ) nach einem der vorhergehenden Ansprüche, dadurch gekennzeichnet, daß der zweite Anschluß eine S₀-Schnittstelle ( S₀ ) beinhaltet.

## Claims

1. Protocol adapter (PA) having two connecting terminals, a first connecting terminal having an S₀ interface (S₀) for connecting the protocol adapter (PA) via the S₀ interface (S₀) to a network termination device (NT) and a second connecting terminal for connecting the protocol adapter (PA) to at least one telecommunications terminal appliance (TE), characterized in that, in normal operation, the protocol adapter (PA) is supplied with a supply voltage having a positive potential via the S₀ interface (S₀), in that, in emergency operation, the protocol adapter (PA) is supplied with a supply voltage having negative potential via the S₀ interface (S₀), and in that, in emergency operation, a shunting line (UL) is switched through to connect the two connecting terminals directly.

2. Protocol adapter (PA) according to Claim 1, characterized in that the protocol adapter (PA) comprises a relay for interrupting the shunting line (UL) in normal operation and for switching the shunting line (UL) through in emergency operation.

3. Protocol adapter (PA) according to Claim 1 or 2, characterized in that the protocol adapter (PA) is provided for matching more than two protocols and in that at least two telecommunications terminal appliances (TE) having different protocols can be connected to the second connecting terminal.

4. Protocol adapter (PA) according to Claim 1 or 2, characterized in that it is provided for matching two protocols in both transmission directions.

5. Protocol adapter (PA) according to Claim 3 or 4, characterized in that one protocol is the ISDN D channel protocol 1 TR 6 of the Federal German Post and a further protocol is the ISDN protocol of the ETSI (European Telecommunications Standards Institute) for Layer 3 functions (User-Network Interface Layer 3 Specifications for basic call control).

6. Protocol adapter (PA) according to one of the preceding claims, characterized in that the second connecting terminal comprises an S₀ interface (S₀).

## Revendications

1. Adaptateur de protocole (PA) à deux connexions, une première connexion avec une interface S₀ (S₀) pour raccorder l'adaptateur de protocole (PA) par l'intermédiaire de l'interface S₀ (S₀) à un terminal de réseau (NT), et une deuxième connexion pour relier l'adaptateur de protocole (PA) à au moins un terminal de télécommunication (TE),
caractérisé en ce qu'en fonctionnement normal, l'adaptateur de protocole (PA), est alimenté par l'intermédiaire de l'interface S₀ (S₀) par une tension d'alimentation de potentiel positif, en ce qu'en fonctionnement de secours, l'adaptateur de protocole (PA) est alimenté par l'intermédiaire de l'interface S₀ (S₀) par une tension d'alimentation de potentiel négatif, et en ce qu'en fonctionnement de secours, une ligne de pontage (UL) est connectée pour un raccordement direct des deux connexions.

2. Adaptateur de protocole (PA) selon la revendication 1, caractérisé en ce que l'adaptateur de protocole (PA) contient un relais pour interrompre la ligne de pontage (UL) en fonctionnement normal et pour connecter la ligne de pontage (UL) en fonctionnement de secours.

3. Adaptateur de protocole (PA) selon la revendication 1 ou 2, caractérisé en ce que l'adaptateur de protocole (PA) est prévu pour s'adapter à plus de deux protocoles, et en ce qu'au moins deux terminaux de télécommunication (TE) avec des protocoles différents peuvent être raccordés à la deuxième connexion.

4. Adaptateur de protocole (PA) selon la revendication 1 ou 2, caractérisé en ce que celui-ci est prévu pour s'adapter à deux protocoles dans les deux sens de transmission.

5. Adaptateur de protocole (PA) selon la revendication 3 ou 4, caractérisé en ce qu'un des protocoles est le protocole de canal D RNIS 1 TR 6 de Deutsche Rundespost et qu'un autre protocole est le protocole RNIS d'ETSI (European Telecommunications Standards Institute) pour des fonctions de niveau réseau (User-Network Interface Layer 3 Specifications for basic call control).

6. Adaptateur de protocole (PA) selon l'une quelconque des revendications précédentes, caractérisé en ce que la deuxième connexion contient une interface S₀ (S₀).
